# EUROPÄISCHE PATENTSCHRIFT

(11) **EP 0 899 465 B1**
(45) Veröffentlichungstag und Bekanntmachung des Hinweises auf die Patenterteilung: **06.08.2003**
(21) Anmeldenummer: 98112028.0
(22) Anmeldetag: 30.06.1998
(51) Int. Cl.: B61D 17/04, B62D 27/02, B62D 33/04, F16B 7/04, B62D 29/00, F16B 5/00

(54) **Vorrichtung zum Verbinden von zwei Leichtbauprofilen**
Device for joining two light-weight profiles
Dispositif pour connecter deux profilés légers

(30) Priorität: 26.08.1997 DE 19737049
(43) Veröffentlichungstag der Anmeldung: 03.03.1999
(73) Patentinhaber: SIEMENS AKTIENGESELLSCHAFT, 80333 München (DE)
(72) Erfinder: Altenburg, Klaus, Dr.-Ing., 52146 Würselen (DE); Zimmermann, Michael, Dipl.-Ing., 52066 Aachen (DE)

(56) Entgegenhaltungen:
- EP-A- 0 239 781
- EP-A- 1 024 301
- DE-A- 1 950 086
- DE-A- 3 527 238
- GB-A- 2 083 881
- US-A- 2 496 032
- US-A- 3 873 219

## Beschreibung

Die Erfindung bezieht sich auf eine Vorrichtung zum Verbinden von zwei Leichtbauprofilen gemäß dem Oberbegriff des Anspruchs 1.

Leichtbauprofile, wie sie insbesondere im Fahrzeugbau und hier vor allem beim Aufbau von Personenwagen für Eisenbahnzüge verwendet werden, zeichnen sich dadurch aus, dass sie eine im Verhältnis zu ihrer Querschnittsfläche dünne Wandstärke haben. Soweit das Verbinden von zwei Leichtbauprofilen durch Schweißen nicht möglich ist, werden die Profile verschraubt oder durch Blindniete miteinander verbunden. Die Folge davon ist, dass bei Schubbeanspruchungen an den Bohrungen, wo der Spannbolzen durch die beiden Profile hindurchgeführt ist, hohe Lochleibungsdrücke auftreten. Hier bringt auch eine Vergrößerung des Querschnitts des Spannbolzens keine wirksame Abhilfe, zumal ein derartig verdickter Spannbolzen die Konstruktion nur unnötig schwerer machen würde.

Zusätzlich tritt hinzu, dass die Verbindung in aller Regel die äußere Kontur der beiden miteinander verbundenen Leichtbauprofile nicht überschreiten darf, das heißt, dass der Spannbolzen im Höchstfall nicht länger sein darf, als die gemeinsame Querschnittsbreite der miteinander verbundenen Profile. In der Regel ist es so, dass bei der Verwendung von Blindnieten als Spannbolzen auch noch ein bestimmter Freiraum bleiben muss, damit der zu verformende Schaft des Blindniets störungsfrei eingeführt werden kann.

Aus der DE 37 16 383 C1 ist beispielsweise ein Verbindungsprofil bekannt, das aus zwei Rohren mit jeweils rechteckigem Querschnitt besteht. Zwischen den Rohren ist eine Isoliereinlage angeordnet, die von separaten Verbindungskörpern durchsetzt ist. Die Verbindungskörper ragen mit ihren Enden durch Bohrungen der einander zugekehrten Innenwände der Rohre hindurch in das Innere der Rohre hinein. Die Enden der Verbindungskörper weisen axiale Schlitze auf, die zwei Wandabschnitte definieren, welche mittels je eines Spreizkörpers beim Zusammenfahren der Rohre unmittelbar hinter den einander zugewandten Innenwänden der Rohre ausgespreizt werden. Nachteilig an dieser genannten Konstruktion ist, dass jeweils mehrere Verbindungskörper erforderlich sind, die von mindestens der gleichen Anzahl, von im Inneren der Rohre vorgesehenen Spreizkörpern aufgeweitet werden müssen.

Weiterhin ist aus der DE 35 24 346 A1 ein Leichtbauprofil mit rechteckigem Querschnitt bekannt, bei dem einander gegenüberliegende Seiten napfartige Vertiefungen aufweisen, die einander in der Mitte des Querschnitts berühren. Durch Bohrungen im Zentrum jeder Vertiefung ist ein Befestigungsbolzen hindurchgeführt und daselbst verriegelt. Nachteilig an dieser Konstruktion ist, dass an allen Verbindungsstellen jeweils eine Veränderung des Ursprungsquerschnitts erforderlich ist, der eine Formveränderung voraussetzt. Damit aber werden an den Verbindungsstellen jene Spannungen eingefroren, die vorab durch die Formänderung am Profil hervorgerufen werden. Außerdem setzt die Verbindung voraus, dass der Werkstoff der Profile tiefziehfähig ist.

Durch die GB-A-2 083 881 ist weiter eine Vorrichtung zum Verbinden von zwei Leichtbauprofilen mit allen Merkmalen bekannt, die im Oberbegriff des Anspruch1 genannt sind. Auch bei diese Vorrichtung wird jedes Leichtbauprofil von einem Formkörper durchdrungen, der mit dem zugehörigen Profil fest verbunden ist. Jeder Formkörper weist eine zentrale Bohrung auf, durch die ein Schraubenbolzen hindurchgeführt ist. Zur Verriegelung des Schraubenbolzens ist eine der Bohrungen mit einem Gewinde versehen. Der Kopf des Schraubenbolzens liegt allerdings außerhalb des Leichtbauprofils.

Der EP-A-1 024 301 ist eine Vorrichtung zum Befestigen eines plattenförmigen Bauteils an einer Rahmenstruktur zu entnehmen. Bei dieser Vorrichtung enthält das plattenförmige Bauteil eine topfartige Buchse, in der ein Schraubenbolzen einschließlich seines Kopfes angeordnet ist. Hierbei liegt der Kopf des Schraubenbolzens also nicht außerhalb des plattenförmigen Bauteils.

Aus den vorstehend skizzierten Sachverhalten ergibt sich die Aufgabe für die Erfindung, eine versenkte Verbindung zwischen zwei Leichtbauprofilen so auszugestalten, dass der Lochleibungsdruck nicht zu Verformungen der Wandung der Leichtbauprofile führen kann, die Verbindung zugleich in der Lage ist, hohe Schubkräfte zu übertragen und dass die Verbindung von Fall zu Fall wieder gelöst werden kann. Dabei wird Wert darauf gelegt, dass die die Verbindung herstellenden Teile preisgünstig und untereinander weitgehend austauschbar sind. Schließlich soll die Verbindung einfach, dauerhaft und robust sein.

Diese Aufgabe wird in Verbindung mit dem Oberbegriff durch die im Kennzeichenteil des Anspruchs 1 angegebenen Merkmale gelöst.

Zur Erleichterung des Verständnisses der nachfolgenden Ausführungen wird hiermit festgelegt, dass unter dem Begriff "Innenseite" jener Bereich der Verbindung zu verstehen ist, wo die beiden Leichtbauprofile aneinander grenzen und dass unter dem Begriff "Außenseite" jener Bereich zu verstehen ist, der dem äußeren Umriß der beiden Leichtbauprofile zugewandt ist.

Geht man davon aus, dass die Leichtbauprofile beispielsweise aus Stahl bestehen und die darin eingelassenen Formkörper aus Feinguss, so wird bereits deutlich, dass über die vom Spannbolzen auf die zentralen Bohrungen und weiter über den Umfang der Formkörper auf die Wandung der Leichtbauprofile übertragenen Schubkräfte beträchtlich höher sein können, als wenn der Spannbolzen unmittelbar von den Wandungen der Leichtbauprofile selbst gehalten würde. Da aber auch eine derartige Konstruktion noch nicht für alle Belastungsfälle mit Sicherheit ausreicht, ist vorgesehen, dass die zentrale Bohrung von wenigstens einem der Formkörper eine konische Erweiterung aufweist, in welche ein kegelstumpfförmiger Zwischenkörper eingeführt ist, der eine zentrale Bohrung für den Spannbolzen und eine Sitzfläche für eines der beiden verbreiterten Enden des Spannbolzens hat. Auf diese Weise wird der die Schubkräfte übertragende Querschnitt des Spannbolzens um ein Mehrfaches vergrößert. Zweckmäßig ist der kegelstumpfförmige Zwischenkörper in dem Formkörper mit Spiel gelagert. Eine darüberhinausgehende Verbesserung der Verbindung wir dadurch erzielt, dass das innere Ende des Zwischenkörpers in eine zweite Ausnehmung hineinragt, die auf der Innenseite des dem Zwischenkörper gegenüberliegenden Formkörpers vorgesehen ist. Auch in dieser zweiten Ausnehmung ist das innere Ende des Zwischenkörpers mit Spiel gelagert wobei, dieses innere Ende zusätzlich auch noch eine ballige Außenkontur hat. Damit ist die Möglichkeit geschaffen, mehrere gleichartige Verbindungen entlang einer Linie oder einer sonstigen geometrischen Figur, beispielsweise einem Dreieck anzuordnen. Da man bei der Herstellung der Bohrungen in den Leichtbauprofilen, wo die Elemente der Verbindung angeordnet werden, mit Fertigungstoleranzen rechnen muss, können über das Spiel des kegelstumpfförmigen Zwischenkörpers diese Fertigungstoleranzen in Grenzen ausgeglichen werden, indem der Zwischenkörper eine geringfügige Lageabweichung einnehmen kann. Dabei ist es in allen Fällen ausreichend, wenn das Spiel der Lagerung des Zwischenkörpers in den beiden Formkörpern in dem Bereich zwischen 0,025 und 1mm vorgesehen wird. Ein gleichgroßes Spiel besteht aber auch zwischen dem Spannbolzen und der zentralen Bohrung des kegelstumpfförmigen Zwischenkörpers.

Zusätzlich weist der Zwischenkörper auch noch eine zu der zentralen Bohrung parallele Gewindebohrung auf. Diese Gewindebohrung erfüllt den Zweck, dass nach dem Lösen des Spannbolzens, beim Auflösen der gesamten Verbindung der Zwischenkörper durch Hineindrehen einer Schraube in die Gewindebohrung gegebenenfalls von dem Formkörper gelöst werden kann, falls er sich von dort nicht bereits von selbst löst.

Üblicherweise ist vorgesehen, dass jeder der beiden Formkörper einen runden Querschnitt hat. Davon abweichend und in besonderen Fällen können aber auch andere Konturen vorgesehen sein wie zum Beispiel Rechtecke oder elliptische bzw. ovale Formen.

Schließlich hat es sich auch als zweckmäßig erwiesen, wenn die beiden Formkörper mit den jeweils zugehörigen Leichtbauprofilen verschweißt werden. Als besonders geeignetes Schweißverfahren kommt dabei das Laserschweißen in Betracht. Zu diesem Zweck wird jeder der beiden Formkörper auf der Innenseite der Verbindung mit einem kleinen umlaufenden Bund versehen. Die Abmessungen dieses Bundes sind verhältnismäßig gering, beträgt er in seiner Höhe doch höchstens 1mm und in seinem Umfang ebensoviel. Beim Laserschweißen wird der überwiegende Teil dieses Bundes für die Verschweißung des Formkörpers mit dem zugehörigen Leichtbauprofil geopfert.

Auch geht man üblicherweise davon aus, dass die Verbindung zwischen zwei hohlen, rechteckigen Leichtbauprofilen realisiert wird. Davon abweichend aber muss man zunächst in Betracht ziehen, dass sich die beiden zu verbindenden hohlen Leichtbauprofile sowohl hinsichtlich ihrer Querschnittsform als auch ihrer Querschnittsgröße voneinander unterscheiden können. Im Extremfall kann es sogar so sein, dass ein rundes hohles Leichtbauprofil mit einem rechteckigen hohlen Leichtbauprofil verbunden wird. Die Verbindung ist aber auch für den Fall vorgesehen, dass ein hohles Leichtbauprofil beliebiger Querschnittsform- und größe mit einem massiven Leichtbauprofil beliebiger Querschnittsform- und größe verbunden wird.

Weitere vorteilhafte Ausgestaltungen ergeben sich aus den Gegenständen der einzelnen Unteransprüche.

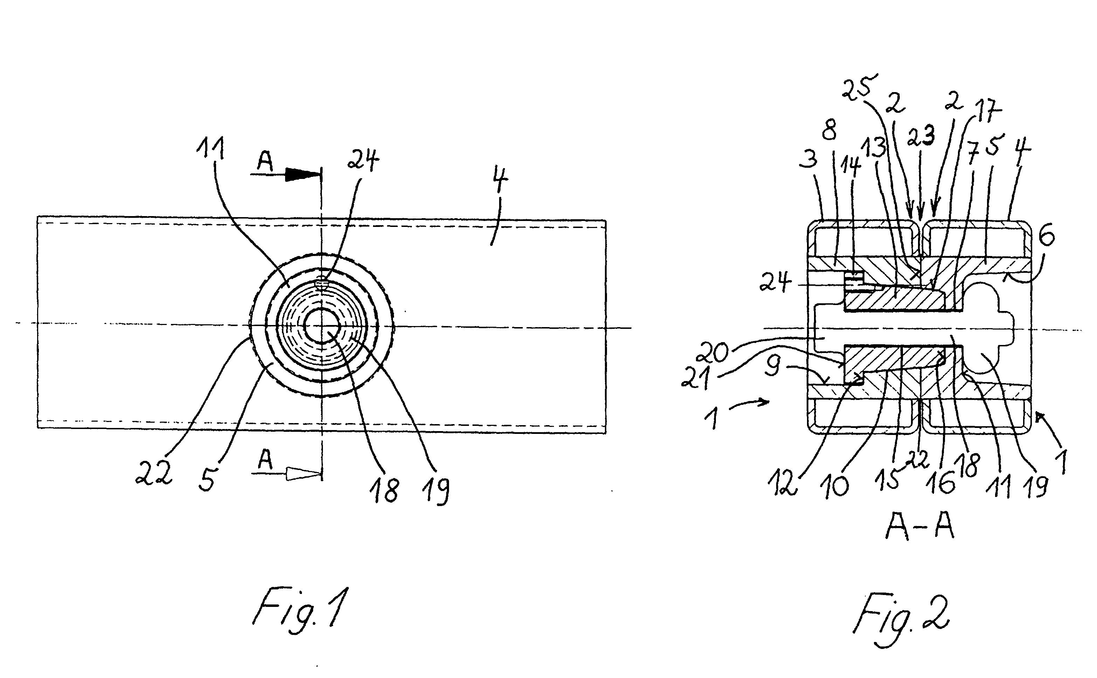

Nachfolgend wird die Erfindung an einem Ausführungsbeispiel näher beschrieben. Es zeigen jeweils annähernd maßstabsgetreu die
- Fig.1 eine Draufsicht der Verbindung und
- Fig.2 einen Schnitt durch die Verbindung längs der Schnittlinie A-A der Fig.1.

Getreu der Eingangs gegebenen Definition wird mit der Ziffer 1 die Außenseite der Verbindung beschrieben und mit der Ziffer 2 die Innenseite. Im vorliegenden Fall werden zwei hohle Leichtbauprofile 3 und 4 miteinander verbunden, die jeweils dieselbe Querschnittsform und Größe haben. Im vorliegenden Fall sind die beiden Querschnittsprofile 3 und 4 auch noch parallel zueinander ausgerichtet, was aber nicht immer der Fall zu sein braucht.

Das hohle Leichtbauprofil 4 wird von einem Formkörper 5 durchdrungen, der zur Außenseite 1 hin eine Ausnehmung 6 aufweist. Außerdem hat der Formkörper 5 eine zentrale Bohrung 7.

Ein ähnlicher Formkörper 8 durchdringt das hohle Leichtbauprofil 3 von der anderen Seite her. Auch der Formkörper 8 hat eine außenseitige Ausnehmung 9 und eine zentrale Bohrung 10. Auf dem Grunde ihrer Ausnehmungen 6 bzw. 9 haben die beiden Formkörper 5 bzw. 8 jeweils eine Sitzfläche 11 und 12. Bei dem Formkörper 8 ist die zentrale Bohrung 10 konisch erweitert und dort ist ein kegelstumpfförmiger Zwischenkörper 13 gelagert. Der kegelstumpfförmige Zwischenkörper 13 hat einen Bund 14, mit dem er auf der Sitzfläche 12 aufliegt.

Der kegelstumpfförmige Zwischenkörper 13 hat auch eine zentrale Bohrung 15, die mit der zentralen Bohrung 7 des Formkörpers 5 fluchtet. Das innere Ende 16 des Zwischenkörpers 13 hat eine ballige Außenkontur und erstreckt sich in eine zweite Ausnehmung 17, die auf der Innenseite des Formkörpers 5 vorgesehen ist.

Durch die zentralen Bohrungen 7 und 5 hindurch ist ein Spannbolzen 18 eingeführt und dort verriegelt. Im vorliegenden Falle handelt es sich bei dem Spannbolzen 18 um einen Blindniet. Dieser hat an seinen beiden äußeren Enden jeweils eine Verbreiterung 19 bzw. 20. Während die Verbreiterung 19 auf der Sitzfläche 11 aufliegt, ruht die Verbreiterung 20 auf einer Sitzfläche 21, welche den Bund 14 auf seiner Außenseite plan abschließt.

Die beiden Formkörper 5 und 8 sind mit ihren jeweiligen hohlen Leichtbauprofilen 4 bzw. 3 fest verbunden. Sie sind durch Laserschweißung mit den jeweiligen Leichtbauprofilen 3 bzw. 4 verschweißt und weisen zu diesem Zweck je einen Bund 22 auf, der geringe Abmessungen hat. Im vorliegenden Falle hat jeder der Bünde 22 eine Breite von etwa 0,5mm und eine Höhe von 0,5mm. Bei der Laserschweißung wird ein Teil des Materials der Bünde 22 für die Bildung der Schweißnaht geopfert. Übrig bleibt ein geringer Spalt 23, der zwischen den beiden Leichtbauprofilen 3 und 4 klafft. Der Nutzen des Spalts 23 besteht darin, dass er eine gute Belüftung der Verbindung zwischen den beiden Leichtbauprofilen 3 und 4 ermöglicht.

Schließlich weist der kegelstumpfförmige Zwischenkörper 13 auch noch eine Gewindebohrung 24 auf. Sollte die Verbindung einmal gelöst werden müssen, und der Zwischenkörper 13 darin stecken bleiben, so wird ein Schraube in die Gewindebohrung 24 eingedreht, die beim Auftreffen auf die Sitzfläche 12 den Zwischenkörper 13 heraushebt.

Zu beachten ist, dass die gesamte Verbindung über den Spannbolzen 18 zu den Außenseiten 1 der beiden Leichtbauprofile 3 und 4 hin bündig abschließt. Damit können die Außenseiten 1 bei Bedarf auch noch mit Blechen beplankt werden. Die Ausnehmung 6 ist ausreichend tief, damit, bei Verwendung eines Blindniets als Spannbolzen 18 dieser von im vorliegenden Falle der Zeichnung links nach rechts in die zentralen Bohrungen 15 und 7 eingeführt werden kann ohne an die äußere Beplankung (nicht gezeigt) anzustoßen. Bemerkenswert ist zudem, dass der kegelstumpfförmige Zwischenkörper 13 die Schubfestigkeit der gesamten Verbindung erheblich erhöht, indem er nämlich den Querschnitt des Spannbolzens 18 an der Fügestelle 25 zwischen den beiden Leichtbauprofilen 3 und 4 beträchtlich vergrößert, wie das unschwer aus der Zeichnung erkennbar ist.

Die Verwendung von Blindnieten oder Schließringbolzen als Spannbolzen 18 sind dem im Leichtbau bzw. Fahrzeugbau tätigen Fachmann hinreichend geläufig, sodass diese überwiegend als Normteile zur Verfügung stehenden Verbindungselemente hier nicht näher erläutert werden brauchen. Ihre Verwendung zeichnet sich besonders dadurch aus, dass sie von ein und derselben Montageseite her angewendet werden können. Zumeist ist dies die Innenseite eines Waggons oder Behälters. Der Vollständigkeit halber soll allerdings auch nicht unerwähnt bleiben, dass anstelle von Blindnieten oder Schließringbolzen auch ein einfacher Schraubenbolzen zur Anwendung gelangen kann, wenn dies die Einbauverhältnisse ermöglichen oder fordern.

Anhand eines einfachen Zahlenbeispiels sei dargelegt, in welchem Maße die Schubfestigkeit einer Verbindung durch die vorliegende Konstruktion erhöht werden kann. Ausgehend von einem Blindniet mit einem Durchmesser von 10mm, steht ein Scherquerschnitt von 78mm² zur Verfügung. Mit Hilfe des kegelstumpfförmigen Zwischenkörpers wird dieser Scherquerschnitt auf 316mm² vergrößert, was einem Mehrfachen des Wertes des Scherquerschnitts des einfachen Spannbolzens entspricht. Aber auch die Lochleibung wird vergrößert. Ohne den Einsatz von Formkörpern beträgt die zur Lochleibung zur Verfügung stehende Fläche ungefähr 21mm². Mit Hilfe der Formkörper wird diese Fläche auf ca. 130mm² vergrößert und entspricht somit wiederum einem Mehrfachen des Ausgangswertes.

### Ziffernverzeichnis

- 1: Außenseite
- 2: Innenseite
- 3: Leichtbauprofil
- 4: Leichtbauprofil
- 5: Formkörper
- 6: Ausnehmung
- 7: zentrale Bohrung
- 8: Formkörper
- 9: Ausnehmung
- 10: zentrale Bohrung
- 11: Sitzfläche
- 12: Sitzfläche
- 13: kegelstumpfförmiger Zwischenkörper
- 14: Bund
- 15: zentrale Bohrung
- 16: inneres Ende
- 17: zweite Ausnehmung
- 18: Spannbolzen
- 19: Ende des Spannbolzens
- 20: Ende des Spannbolzens
- 21: Sitzfläche
- 22: Bund
- 23: Restspalt
- 24: Gewindebohrung
- 25: Fügestelle

## Patentansprüche

1. Vorrichtung zum Verbinden von zwei Leichtbauprofilen, wobei jedes Leichtbauprofil (3,4) von einem Formkörper (5,8) durchdringbar ist, der mit dem zugehörigen Leichtbauprofil (3, 4) fest verbindbar ist und eine zentrale Bohrung (7, 10) aufweist, wobei ein Spannbolzen (18) durch die zentralen Bohrungen (7, 10) hindurchgeführt und daselbst verriegelt ist, **dadurch gekennzeichnet, dass** jeder Formkörper (5, 8) zur Außenseite der Verbindung hin eine Ausnehmung (6, 9) aufweist, die eine Sitzfläche (11,12) hat, wobei die sich an eine der Ausnehmungen (9) anschließende zentrale Bohrung (10) von wenigstens einem der Formkörper (8) eine konische Erweiterung aufweist, in welche von der Außenseite (1) her ein kegelstumpfförmiger Zwischenkörper (13) eingeführt ist, der eine zentrale Bohrung (15) für den Spannbolzen (18) und eine Sitzfläche (21) für ein verbreitertes Ende (20) des Spannbolzens (18) aufweist, dessen anderes verbreitertes Ende (19) gegen die Sitzfläche (19) des zweiten Formkörpers (5) anliegt, wobei die verbreiterten Enden (19, 20) des Spannbolzens (18) in den Ausnehmungen (6, 9) versenkt sind.

2. Vorrichtung nach Anspruch 1, **dadurch gekennzeichnet, dass** der kegelstumpfförmige Zwischenkörper (13) einen umlaufenden Bund (14) hat, mit dem er auf der Sitzfläche (12) des jeweiligen Formkörpers (8) aufliegt, während seine Mantelfläche mit Spiel in der konischen Ausnehmung (10) des Formkörpers (8) angeordnet ist.

3. Vorrichtung nach Anspruch 2, **dadurch gekennzeichnet, dass** das Spiel zwischen 0,05 und 1 mm beträgt.

4. Vorrichtung nach Anspruch 1, **dadurch gekennzeichnet, dass** das innere Ende (16) des Zwischenkörpers (13) in eine zweite Ausnehmung (17) hineinragt, die auf der Innenseite (2) des dem Zwischenkörper (13) gegenüberliegenden Formkörpers (5) vorgesehen ist.

5. Vorrichtung nach Anspruch 4, **dadurch gekennzeichnet, dass** die Mantelfläche des inneren Endes (16) des Zwischenkörpers (13) ballig ausgebildet ist.

6. Vorrichtung nach den Ansprüchen 4 und 5, **dadurch gekennzeichnet, dass** das innere Ende (16) des Zwischenkörpers (13) mit Spiel in der zweiten Ausnehmung (17) des gegenüberliegenden Formkörpers (5) angeordnet ist.

7. Vorrichtung nach Anspruch 6, **dadurch gekennzeichnet, dass** das Spiel zwischen 0,05 und 1 mm beträgt.

8. Vorrichtung nach einem der Ansprüche 4 bis 7, **dadurch gekennzeichnet, dass** zwischen dem inneren Ende (16) des Zwischenkörpers (13) und dem Boden der zweiten Ausnehmung (17) des gegenüberliegenden Formkörpers (5) ein Spiel besteht.

9. Vorrichtung nach Anspruch 8, **dadurch gekennzeichnet, dass** das Spiel zwischen 0,05 und 1 mm beträgt.

10. Vorrichtung nach Anspruch 2, **dadurch gekennzeichnet, dass** der Zwischenkörper (13) wenigstens eine zu seiner zentralen Bohrung (10) parallele Gewindebohrung (24) aufweist.

11. Vorrichtung nach einem der Ansprüche 1 bis 10, **dadurch gekennzeichnet, dass** wenigstens einer der beiden Formkörper (5, 8) auf der Innenseite (2) einen Bund (22) aufweist, wobei das Leichtbauprofil (3, 4) und der zugehörige Formkörper (5, 8) unter zumindest teilweiser Opferung des Bundes (22) miteinander durch Laserstrahl verschweißbar sind.

12. Vorrichtung nach Anspruch 11, **dadurch gekennzeichnet, dass** der Bund (22) zwischen 0,25 und 1 mm hoch und ebenso breit ist.

13. Vorrichtung nach einem der Ansprüche 1 bis 12, **dadurch gekennzeichnet, dass** der Spannbolzen (18) ein Blindniet oder ein Schließringbolzen ist.

## Claims

1. Device for connecting two lightweight profiles, it being possible for each lightweight profile (3, 4) to have a shaped body (5, 8) passing through it, the shaped body being capable of fixed connection to the associated lightweight profile (3, 4) and having a central bore (7, 10), and a clamping bolt (18) being guided through the central bores (7, 10) and being blocked there, **characterized in that** each shaped body (5, 6), in the direction of the outside of the connection, has a recess (6, 9) which has a seat surface (11, 12), the central bore (10), which adjoins one of the recesses (9) and belongs to at least one of the shaped bodies (8), having a conical widening into which a frustoconical intermediate body (13) is introduced from the outside (1), the intermediate body having a central bore (15) for the clamping bolt (18) and a seat surface (21) for one widened end (20) of the clamping bolt (18), the other widened end (19) of which butts against the seat surface (19) of the second shaped body (5), and the widened ends (19, 20) of the clamping bolt (18) being accommodated within the recesses (6, 9).

2. Device according to Claim 1, **characterized in that** the frustoconical intermediate body (13) has an encircling collar (14) by means of which it rests on the seat surface (12) of the respective shaped body (8), while its lateral surface is arranged with play in the conical recess (10) of the shaped body (8).

3. Device according to Claim 2, **characterized in that** the play is between 0.05 and 1 mm.

4. Device according to Claim 1 **characterized in that** the inner end (16) of the intermediate body (13) projects into a second recess (17), which is provided on the inside (2) of the shaped body (5) located opposite the intermediate body (13).

5. Device according to Claim 4, **characterized in that** the lateral surface of the inner end (16) of the intermediate body (13) is of convex design.

6. Device according to Claims 4 and 5, **characterized in that** the inner end (16) of the intermediate body (13) is arranged with play in the second recess (17) of the shaped body (5) located opposite.

7. Device according to Claim 6, **characterized in that** the play is between 0.05 and 1 mm.

8. Device according to one of Claims 4 to 7, **characterized in that** there is play between the inner end (16) of the intermediate body (13) and the base of the second recess (17) of the shaped body (5) located opposite.

9. Device according to Claim 8, **characterized in that** the play is between 0.05 and 1 mm.

10. Device according to Claim 2, **characterized in that** the intermediate body (13) has at least one threaded bore (24) parallel to its central bore (10).

11. Device according to one of Claims 1 to 10, **characterized in that** at least one of the two shaped bodies (5, 8) has a collar (22) on the inside (2), it being possible for the lightweight profile (3, 4) and the associated shaped body (5, 8) to be welded to one another by a laser beam with the collar (22) being sacrificed at least in part.

12. Device according to Claim 11, **characterized in that** the collar (22) is between 0.25 and 1 mm in height and has a width which equals its height.

13. Device according to one of Claims 1 to 12, **characterized in that** the clamping bolt (18) is a blind rivet or a collared bolt.

## Revendications

1. Dispositif pour assembler deux profilés légers, chaque profilé (3, 4) léger pouvant être traversé par un corps (5, 8) façonné, qui peut être assemblé fixement au profilé (3, 4) léger associé et qui possède un perçage (7, 10) central, un boulon (18) de serrage étant passé dans les perçages (7, 10) centraux et y étant verrouillé, **caractérisé en ce que** chaque corps (5, 8) façonné comporte, en direction du côté extérieur de l'assemblage, un évidement (6, 9) qui possède une surface (11, 12) d'assise, le perçage (10) central, se raccordant à un (9) des évidements, d'au moins un (8) des corps façonnés possédant un élargissement conique dans lequel est introduit, par le côté (1) extérieur, un corps (13) intermédiaire tronconique qui possède un perçage (15) central pour le boulon (18) de serrage et une surface (21) d'assise pour une extrémité (20) élargie du boulon (18) de serrage, dont l'autre extrémité (19) élargie s'applique contre la surface (11) d'assise du deuxième corps (5) façonné, les extrémités (19, 20) élargies du boulon (18) de serrage étant escamotées dans les évidements (6, 9).

2. Dispositif suivant la revendication 1, **caractérisé en ce que** le corps (13) intermédiaire tronconique possède un collet (14) périphérique, par lequel il repose sur la surface (12) d'assise du corps (8) façonné respectif, tandis que sa surface latérale est disposée avec jeu dans l'évidement (10) conique du corps (8) façonné.

3. Dispositif suivant la revendication 2, **caractérisé en ce que** le jeu est compris entre 0,05 et 1 mm.

4. Dispositif suivant la revendication 1, **caractérisé en ce que** l'extrémité (16) intérieure du corps (13) intermédiaire s'enfonce dans un deuxième évidement (17), qui est prévu sur le côté (2) intérieur du corps (5) façonné opposé au corps (13) intermédiaire.

5. Dispositif suivant la revendication 4, **caractérisé en ce que** la surface latérale de l'extrémité (16) intérieure du corps (13) intermédiaire est réalisée bombée.

6. Dispositif suivant les revendications 4 et 5, **caractérisé en ce que** l'extrémité (16) intérieure du corps (13) intermédiaire est disposée avec jeu dans le deuxième (17) évidement du corps (5) façonné opposé.

7. Dispositif suivant la revendication 6, **caractérisé en ce que** le jeu est compris entre 0,05 et 1 mm.

8. Dispositif suivant l'une des revendications 4 à 7, **caractérisé en ce qu'**il existe un jeu entre l'extrémité (16) intérieure du corps (13) intermédiaire et le fond du deuxième (17) évidement du corps (5) façonné opposé.

9. Dispositif suivant la revendication 8, **caractérisé en ce que** le jeu est compris entre 0,05 et 1 mm.

10. Dispositif suivant la revendication 2, **caractérisé en ce que** le corps (13) intermédiaire possède au moins un perçage (24) fileté parallèle à son perçage (10) central.

11. Dispositif suivant l'une des revendications 1 à 10, **caractérisé en ce qu'**au moins un des deux corps (5, 8) façonnés possède sur le côté (2) intérieur un collet (22), le profilé (3, 4) léger et le corps (5, 8) façonné associé pouvant être mutuellement assemblés par soudage au laser, en sacrifiant au moins partiellement le collet (22).

12. Dispositif suivant la revendication 11, **caractérisé en ce que** le collet (22) est d'une hauteur comprise entre 0,25 et 1 mm, et d'une largeur identique.

13. Dispositif suivant l'une des revendications 1 à 12, **caractérisé en ce que** le boulon (18) de serrage est un rivet aveugle ou un boulon à bague de serrage.
